**Europäisches Patentamt**

**European Patent Office**

**Office européen des brevets**

(11) Numéro de publication: **0170948**
**B1**

(12) **FASCICULE DE BREVET EUROPEEN**

(45) Date de publication du fascicule du brevet:
**16.09.87**

(21) Numéro de dépôt: **85108979.7**

(22) Date de dépôt: **18.07.85**

(51) Int. Cl.⁴: **F 25 B 9/02,** G 05 D 23/02

(54) **Régulateur de refroidisseur à effet Joule-Thomson.**

(30) Priorité: **30.07.84 FR 8412096**

(43) Date de publication de la demande:
**12.02.86 Bulletin 86/7**

(45) Mention de la délivrance du brevet:
**16.09.87 Bulletin 87/38**

(84) Etats contractants désignés:
**DE GB**

(56) Documents cités:
**EP - A - 0 005 048**
**EP - A - 0 069 346**
**FR - A - 1 550 281**
**FR - A - 1 594 598**
**FR - A - 2 265 048**
**FR - A - 2 377 588**
**GB - A - 2 085 139**
**US - A - 1 719 075**
**US - A - 2 312 671**
**US - A - 2 398 262**
**US - A - 3 320 755**
**US - A - 3 375 975**
**US - A - 3 613 689**

(73) Titulaire: **SOCIETE ANONYME DE**
**TELECOMMUNICATIONS (S.A.T.), 40 avenue de New**
**York, F-75116 Paris (FR)**

(72) Inventeur: **Albagnac, René Denis Michel, 34, Rue de**
**Picpus, F-75012 Paris (FR)**

(74) Mandataire: **Casalonga, Axel et al, BUREAU D.A.**
**CASALONGA OFFICE JOSSE & PETIT Morassistrasse 8,**
**D-8000 München 5 (DE)**

ACTORUM AG

## Description

L'invention concerne les refroidisseurs à effet Joule-Thomson utilisant la détente d'un gaz à haute pression pour produire de très basses températures.

De tels refroidisseurs sont utilisés notamment pour refroidir à très basse température les détecteurs à infrarouge embarqués à bord d'engins. Dans ce cas particulier, la source de gaz sous pression est en général un réservoir d'azote à haute pression situé à bord de l'engin et permettant de refroidir la cellule à infrarouge à la température de liquéfaction de l'azote, qui est de 77°K, en partant du gaz à la température ambiante. On conçoit que pour une telle application il soit nécessaire d'avoir une régulation extrêmement précise pour permettre à la fois une mise en froid très rapide et une consommation d'azote minimale une fois la température voulue atteinte. En effet, cette consommation détermine tout à la fois le poids du réservoir d'azote embarqué et la durée de fonctionnement. En outre, il est nécessaire que cette régulation fonctionne correctement pour une température ambiante variant entre de larges limites, cette température ambiante conditionnant à la fois la température du gaz sous pression entrant dans le cryostat, et l'ambiance entourant ce cryostat qui constitue le facteur déterminant des pertes de chaleur, donc de la puissance frigorifique nécessaire. Enfin, il va de soi que l'appareil doit fonctionner correctement avec une pression de gaz dans le réservoir qui va tout naturellement en décroissant au fur et à mesure de la consommation.

Schématiquement, de tels régulateurs comportent nécessairement un organe dilatable qui actionne la fermeture d'un pointeau lorsque la température s'abaisse. Parmi les régulateurs de ce type, on en connaît qui utilisent un organe dilatable relativement élastique, tel qu'un soufflet métallique rempli d'un gaz dilatable, comme décrit dans le document FR-A-2 265 048, ou encore un bilame travaillant en flexion. De tels dispositifs ne peuvent convenir pour l'application envisagée par le fait que, en raison de la grande élasticité de l'organe dilatable, la régulation se trouve fortement influencée par la pression de gaz régnant sous le pointeau.

En outre, dans le cas d'un soufflet métallique à paroi très mince rempli d'un gaz dilatable comme décrit dans le document précité, la conduction thermique longitudinale, aussi bien du soufflet que du gaz, est extrêmement faible. En conséquence, même si on réunit thermiquement l'extrémité fixe de ce soufflet à un point de l'échangeur intermédiaire entre sa partie amont, à la température du gaz, et sa partie aval refroidie, chaque variation de cette température intermédiaire n'agit sur la pression du soufflet qu'avec un retard considérable, introduisant des oscillations dans la régulation.

Pour cette raison, seuls les dispositifs de régulation à dilatation métallique longitudinale peuvent répondre à une relative indépendance vis-à-vis de la pression de gaz, et à une dépendance suffisamment rapide vis-à-vis de la température de l'échangeur.

Parmi les dispositifs de ce dernier type, on connaît notamment ceux décrits dans les brevets français Nos 2 322 336 et 2 377 588. Tous ces dispositifs comportent un organe métallique dilatable longitudinalement, qui est composé d'un tube métallique d'assez grand diamètre relativement au diamètre intérieur du corps de l'échangeur, cet organe dilatable étant fixé mécaniquement et en contact d'échange thermique avec le point froid, c'est-à-dire le siège du pointeau. Il résulte de cette disposition que ces régulateurs antérieurs fonctionnent toujours par tout ou rien et que par suite la régulation présente du pompage. En d'autres termes, chaque fois qu'une basse température a contracté l'organe dilatable au point de fermer le pointeau, le débit est interrompu jusqu'à ce que la température du point froid et de l'organe dilatable soit suffisamment remontée. Ces dispositifs n'ont donc pas une précision suffisante puisque la courbe de température varie en dents de scie, et si les sommets de la courbe répondent aux exigences de température maximale, les points de bas de la courbe conduisent à des pertes inutilement accrues et donc à une consommation de gaz inutilement importante.

On connaît par ailleurs, notamment par le brevet européen N° 84 308 au nom de la demanderesse, l'intérêt qu'il y a à agencer l'organe de fermeture pour qu'il laisse toujours subsister un faible débit minimum déterminé pour que l'on obtienne toujours une phase de liquéfaction en amont de l'étrangleur, afin d'assurer un phénomène d'autorégulation par la simple intervention des différences de pertes de charge entre un débit de gaz liquéfié et le débit correspondant du gaz qui lui donne naissance. Cependant, même un régulateur à dilatation métallique longitudinale qui serait modifié pour le doter d'un tel débit minimum, fonctionnerait toujours sinon par tout ou rien, au moins par tout ou un peu et présenterait toujours nécessairement du pompage. En effet, le phénomène de régulation secondaire qui vient d'être indiqué ne peut fonctionner que dans des limites étroites de températures au voisinage du bas de la gamme nécessaire, car s'il en était autrement, l'organe dilatable deviendrait superflu.

En outre, avec ces dispositifs de régulation antérieurs, lors de la mise en froid initiale, le pointeau arrive généralement à se fermer totalement ou partiellement du fait du refroidissement énergique du point froid, qui est, comme on l'a vu, le siège du pointeau, avant que l'organe à refroidir ait atteint la basse température désirée. En d'autres termes, le pompage intervient davantage encore lors de la mise en froid et augmente la durée de celle-ci, ce qui, comme on l'a vu, est un inconvénient majeur pour l'application envisagée.

Le but de l'invention est d'éliminer les inconvénients précédents en réalisant un régulateur de refroidisseur à tige métallique dilatable longitudinalement qui assure tout à la fois une mise en froid rapide et une régulation précise sans pompage.

L'invention se caractérise par le fait

— qu'une extrémité de cette tige est fixée mécaniquement et est réunie thermiquement par une cloison transversale à l'enveloppe tubulaire de l'échangeur en un point de cette dernière compris entre la partie amont de l'échangeur, à la température d'arrivée du gaz, et la partie aval de cet échangeur, proche du pointeau et refroidie par détente du gaz,

— que l'autre extrémité de cette tige est fixée à une pièce cylindrique à alésage axial diamétralement fendue sur une partie de sa longueur, la tige étant fixée dans cette pièce du côté non fendu de celle-ci pour constituer une fourche de manœuvre du pointeau, entourant le siège du pointeau et entraînant ce pointeau par l'intermédiaire d'un organe de réglage,

— que ladite tige a un diamètre inférieur à celui de ladite pièce cylindrique, laquelle est d'un diamètre très inférieur à celui de l'enveloppe tubulaire dans laquelle elle pénètre en partie, enfin

— que l'intervalle annulaire ainsi ménagé entre l'enveloppe tubulaire et la tige, ainsi qu'entre cette enveloppe et la pièce cylindrique, et s'étendant de la cloison jusqu'à ladite partie aval se trouve garni d'un calorifuge s'opposant aux mouvements de convexion longitudinaux et transversaux.

D'autres particularités de l'invention apparaîtront dans la description qui va suivre d'un mode de régularisation pris comme exemple et représenté sur le dessin annexé, sur lequel:

la figure 1 est une coupe axiale à grande échelle de l'ensemble du cryostat, et

la figure 2 représente une coupe axiale partielle à une encore plus grande échelle et selon un plan de coupe perpendiculaire à celui de la figure 1.

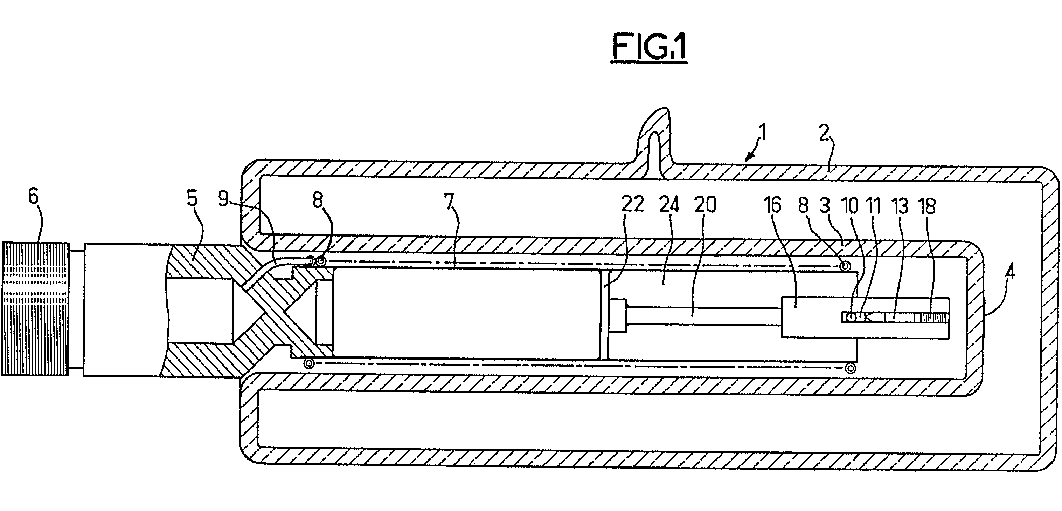

Comme on le voit sur la figure 1, le cryostat 1 est constitué par un vase de Dewar formé d'une enveloppe externe 2 et d'une enveloppe interne 3 séparées par le vide, l'enveloppe intérieure 3 comportant intérieurement dans son fond l'organe à refroidir 4 constitué par exemple par une cellule de détection à infrarouge activée par les rayonnements à travers les parois de fond du cryostat 1.

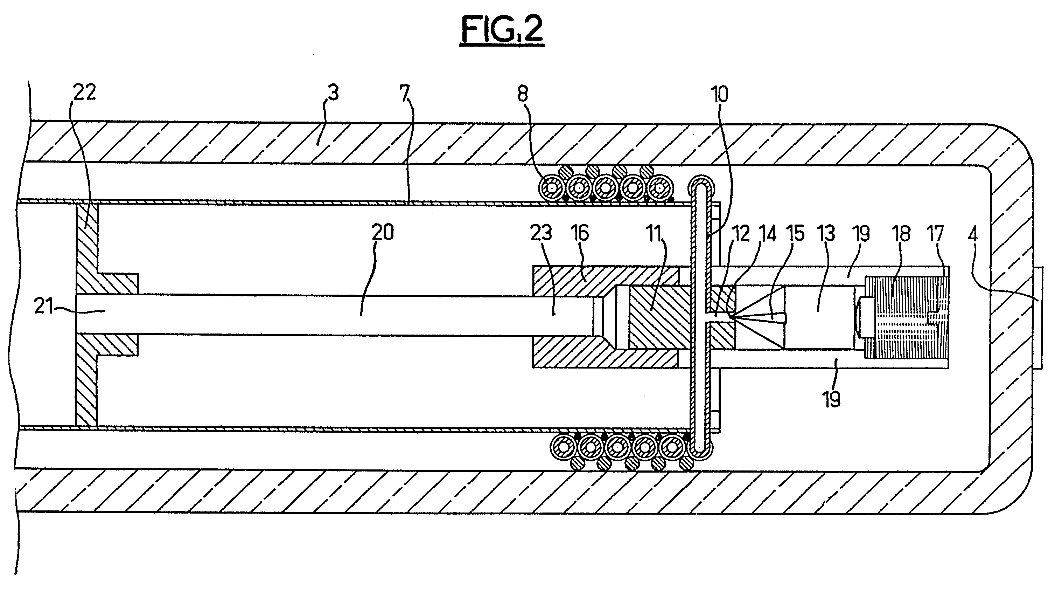

Pour refroidir cette cellule 4, on utilise d'une manière connue un refroidisseur à effet Joule-Thomson comportant un embout de raccordement 5 se raccordant par son extrémité filetée 6 à une arrivée d'azote sous pression, provenant généralement d'un réservoir sous pression. Sur cet embout de raccordement 5 est fixée une enveloppe tubulaire 7 autour de laquelle est bobiné, selon une technique connue, un tube échangeur 8 de très faible diamètre avec, autour de ce tube et autour de l'enveloppe tubulaire 7 respectivement, des spires d'écartement et de chicanage ainsi que de calage, ces divers éléments tout à fait classiques étant visibles sur la figure 2 mais non référencés. Naturellement, une extrémité 9 du tube 8 est raccordée de manière étanche avec l'embout de raccordement 5 du côté de l'arrivée de gaz à température ambiante, et son autre extrémité 10 traverse l'enveloppe tubulaire 7 selon un diamètre, le tube se terminant par une extrémité bouchée. Sur cette partie rectiligne diamétrale 10 est fixé un très petit corps cylindrique 11 percé d'un trou diamétral pour le passage de la partie 10 et d'un trou axial 12 qui traverse également la partie 10 du tube et qui sert de siège pour le pointeau. Naturellement, les deux extrémités au moins du tube 10 sont soudées sur l'enveloppe tubulaire 7 et la pièce 11 est elle-même soudée au centre de cette partie 10 et contre-percée dans le prolongement du trou 12.

C'est par cet orifice 12 que le gaz sortant du serpentin 8 se détend et refroidit à contre-courant l'échangeur tubulaire d'une manière usuelle avant de s'échapper dans l'atmosphère.

Pour modifier le débit de ce gaz, on utilise d'une manière connue un pointeau 13 dont la pointe 14 pénètre dans le trou 12. Dans l'exemple représenté, ce pointeau 13 est simplement constitué par une pièce cylindroconique, avec toutefois de préférence un plat 15 ou un creux pratiqué selon une génératirce du cône et sur une profondeur de pénétration d'environ 7 microns.

Pour manœuvrer ce pointeau, on utilise une fourche 16 constituée par une pièce cylindrique comportant un alésage axial s'ajustant avec le jeu voulu à la périphérie cylindrique du siège 11 ainsi que du pointeau 13, tandis qu'une extrémité filetée 17 reçoit une vis de réglage 18 agissant par simple contact sur ce pointeau 13 sans être solidaire. La paroi cylindrique de la fourche 16 comporte d'autre part deux fentes diamétrales 19 d'une largeur suffisante pour permettre le libre passage de la partie rectiligne 10 du tube 8.

Enfin, pour manœuvrer cette fourche, et par son intermédiaire le pointeau 13, on utilise comme organe dilatable une tige cylindrique 20, par exemple en laiton pour faciliter le brasage ou le soudage, alors que toutes les autres pièces métalliques décrites précédemment sont en alliage Invar, notamment 5, 7, 11, 13, 16 et 18.

Comme on le voit sur les figures, une exrémité 21 de cette tige est fixée mécaniquement et connectée thermiquement par brasure ou soudure et par l'intermédiaire d'une cloison 22, de préférence également un Invar, à la paroi intérieure de l'enveloppe tubulaire 7 en un point de celle-ci qui, comme cela paraît sur la figure 1, se trouve compris entre l'extrémité chaude 9 et l'extrémité froide 10 du tube échangeur 8. L'autre extrémité 23 de cette tige 20 est fixée également par brasure ou soudure à la tête de la fourche cylindrique 16. Comme on le voit sur la figure 2, la tige cylindrique 20 ainsi que la fourche cylindrique 16, qui sont coaxiales à l'enveloppe tubulaire 7, ont l'une et l'autre un diamètre suffisamment réduit pour laisser subsister un intervalle annulaire important entre leur périphérie cylindrique et la périphérie cylindrique intérieure du tube 7. Cela pour éviter tout échange thermique direct par conduction ou par convexion entre ces surfaces. En outre, selon l'invention, on dispose un calorifuge 24, constitué par exemple par du coton naturel, pour remplir cet intervalle et supprimer tous les mouvements de convexion, tant longitudinaux que transversaux, entre le point froid 11 et le reste de l'échangeur.

Grâce à cette disposition, on obtient selon l'invention une plus grande rapidité de mise en froid initiale, et également une régulation précise et sans pompage, même pour des températures ambiantes variant de −40°C à +80°C.

En effet, lors de la mise en service du dispositif, tous les organes ainsi que le gaz sont à la température ambiante, et lorsqu'on ouvre l'arrivée de gaz, par un dispositif usuel non représenté, on produit du froid par l'azote sortant par le siège 12 largement ouvert et se détendant par les fentes 19, cet azote gazeux et froid refroidissant à la fois l'organe 4, l'intérieur du cryostat, et progressivement les diverses spires de l'échangeur tubulaire en commençant par les dernières. Par le processus habituel, on obtient donc progressivement une liquéfaction de cet azote et un abaissement rapide de toute la zone entourant la cellule 4 jusqu'à 77° K. Pendant toute cette phase de fonctionnement en surpuissance, la régulation n'intervient pas par le fait que le froid n'a pas encore atteint la région occupée par la cloison 22. En effet, le gaz continue d'arriver par 9 à la température ambiante et de ce fait apporte pratiquement des calories à la cloison 22, donc à l'extrémité 21 de la tige 20, tandis que son autre extrémité 23 se trouve refroidie seulement par le pont thermique constitué par la fourche 16. Ce n'est donc, contrairement au dispositif habituel, qu'avec un retard important que la régulation entre en jeu, à savoir lorsque la température de liquéfaction a progressé largement sur la longueur du tube-enveloppe 7 par l'extérieur de celui-ci. Ce démarrage en surpuissance permet au dispositif réalisé selon cette technique d'assurer une mise en froid de la température ambiante jusqu'à la température de liquéfaction en un temps aussi court que 2 à 3 secondes.

Une fois que la régulation entre en jeu par fermeture progressive du pointeau afin d'introduire un étranglement qui cesse d'être négligeable, la régulation se fait d'une manière précise et régulière, toujours grâce à la disposition indiquée. En effet, le pontage thermique constitué par la cloison 22 réagit en fonction de la progression de la température de liquéfaction le long des spires 8 à partir du point froid 12, mais en introduisant également un terme de proportionnalité avec la température ambiante, matérialisée par l'arrivée de gaz en 9 à cette température ambiante. Or, on sait que c'est cette même température ambiante qui détermine le gradient de température au travers des parois du cryostat 1, donc les pertes et par conséquent la puissance de réfrigération nécessaire.

A titre d'exemple pratique, on peut régler le pointeau 13 grâce à la vis 18 de telle manière que ce pointeau soit fermé pour une température ambiante de 20°C et une fois le dispositif mis en froid. De la sorte, pour des températures ambiantes comprises entre 20°C et −40°C, ce pointeau reste fermé, et la régulation utilise dans ce cas le phénomène de régulation secondaire exposé plus haut, grâce à la présence du plat 15 et à la variation de la longueur de tube capillaire 8 intéressés par la phase liquide, ce qui suffit à réduire la consommation de gaz lorsque la température ambiante diminue (haute altitude par exemple). Au contraire, lorsque la température ambiante varie de +20° à +80°C, la régulation intervient par la dilatation ou une moindre contraction de la tige 20, grâce au pontage thermique indiqué et en fonction de la progression du froid à une extrémité et de l'arrivée de la température ambiante à l'autre extrémité, tenant compte ainsi à la fois de l'état actuel de la température et de la puissance prévisible.

Enfin, comme avantage supplémentaire, l'invention permet facilement une extrême miniaturisation de l'ensemble du cryostat, donc une réduction corrélative de consommation.

## Revendications

1. Régulateur d'un refroidisseur à effet Joule-Thomson pour cryostat, comportant une enveloppe tubulaire (7) autour de laquelle est bobiné un tube échangeur (8) dans lequel le gaz sous pression est refroidi à contre-courant et partiellement liquéfié avant de se détendre à l'autre extrémité par un orifice (12), ledit régulateur étant constitué par un pointeau (13) commandé par une tige métallique (20) à dilatation longitudinale de manière à refermer ledit orifice au fur et à mesure que la température s'abaisse, cette tige étant intérieure et coaxiale à l'enveloppe tubulaire (7), caractérisé par le fait

— qu'une extrémité (21) de cette tige (20) est fixée mécaniquement et est réunie thermiquement par une cloison transversale (22) à l'enveloppe tubulaire (7) en un point de cette dernière compris entre la partie amont (9) de l'échangeur (8), à la température d'arrivée du gaz, et la partie aval (10) de cet échangeur, proche du pointeau et refroidie par détente du gaz,

— que l'autre extrémité (23) de cette tige est fixée à une pièce cylindrique (16) à alésage axial diamétralement fendue (19) sur une partie de sa longueur, la tige (20) étant fixée dans cette pièce du côté non fendu de celle-ci pour constituer une fourche de manœuvre du pointeau, entourant le siège (11, 12) du pointeau (13) et entraînant ce pointeau par l'intermédiaire d'un organe de réglage (18),

— que ladite tige (20) a un diamètre inférieur à celui de ladite pièce cylindrique (16), laquelle est d'un diamètre très inférieur à celui de l'enveloppe tubulaire (7) dans laquelle elle pénètre en partie, enfin

— que l'intervalle annulaire ainsi ménagé entre l'enveloppe tubulaire (7) et la tige (20), ainsi qu'entre cette enveloppe et la pièce cylindrique (16), et s'étendant de la cloison (22) jusqu'à ladite partie aval (10), se trouve garni d'un calorifuge s'opposant aux mouvements de convexion longitudinaux et transversaux.

2. Régulateur selon la revendication 1, caractérisé par le fait que le pointeau (13), de forme cylindroconique, comporte sur une génératrice de sa partie conique un plat ou un creux (15) de faible profondeur constituant un passage minimum déterminé pour assurer l'intervention d'une régulation secondaire pour les faibles valeurs de la température ambiante.

3. Régulateur selon la revendication 2, caractérisé par le fait que le pointeau (13) est monté à libre coulissement par sa surface cylindrique dans un alésage intérieur de la fourche (16), qui coulisse à l'extérieur du siège (11) également cylindrique, et qu'il est commandé par simple contact avec une vis de réglage (18) dont il n'est pas solidaire.

4. Régulateur selon une des revendications précédentes, caractérisé par le fait que le siège (11) du pointeau est une pièce cylindrique fixée coaxialement à l'enveloppe tubulaire (7) uniquement par l'intermédiaire d'une dernière partie rectiligne (10) du tube échangeur (8) traversant cette enveloppe tubulaire (7) selon un diamètre.

## Patentansprüche

1. Regler für einen Kühler nach dem Joule-Thompsoneffekt als Kälteregler mit einem rohrförmigen Mantel (7), um den ein Austauscherrohr (8) gelegt ist, in dem das Druckgas im Gegenstrom gekühlt und teilweise verflüssigt wird, bevor es sich am anderen Ende durch eine Öffnung (12) ausdehnt, wobei der Regler aus einem Nadelventil (13) besteht, das von einem in Längsrichtung dehnbaren Metallstab (20) gesteuert wird, derart, dass es die Öffnung mit sinkender Temperatur schliesst, wobei der Stab innerhalb des rohrförmigen Mantels (7) und koaxial mit ihm verläuft, dadurch gekennzeichnet, dass ein Ende (21) des Stabes (20) mechanisch festgelegt und über eine querverlaufende Trennwand (22) mit dem rohrförmigen Mantel (7) an einem Punkt desselben zwischen dem stromaufwärtigen Teil (9) des Austauschers (8), der mit der Eingangstemperatur des Gases beaufschlagt ist, und dem stromabwärtigen Teil (10) des Austauschers nahe dem Nadelventil thermisch verbunden ist, der vom sich entspannenden Gas gekühlt wird, dass das andere Ende (23) des Stabes an einem zylindrischen Teil (16) befestigt ist, der axial durchbohrt und über einen Teil seiner Länge in Durchmesserrichtung gespalten (19) ist, wobei der Stab (20) in diesem Teil auf dessen nicht gespaltener Seite befestigt ist, um so eine Gabel zum Steuern des Nadelventilkörpers auszubilden, die den Sitz (11, 12) des Ventilkörpers (13) umgibt und ihn über ein zwischenliegendes Einstellelement (18) mitnimmt, dass der Stab (20) einen kleineren Durchmesser als der zylindrische Teil (16) aufweist, dessen Durchmesser erheblich geringer ist als der des rohrförmigen Mantels (7), in den er teilweise vorsteht, und dass schliesslich der zwischen dem rohrförmigen Mantel (7) und dem Stab (20) sowie zwischen dem Mantel und dem zylindrischen Teil (16) gebildete Ringraum, der sich von der Trennwand (22) bis zum stromaufwärtigen Teil (10) erstreckt, mit einem wärmedämmenden Stoff gefüllt ist, der den längs- und quergerichteten Konvektionsbewegungen entgegenwirkt.

2. Regler nach Anspruch 1, dadurch gekennzeichnet, dass der zylindrisch-konische Ventilkörper (13) auf der Erzeugenden seines konischen Teils eine Abflachung oder flache Vertiefung (15) aufweist, die einen vorbestimmten minimalen Durchlass bildet, der eine Nebenregelung für die niedrigen Werte der Umgebungstemperatur gewährleistet.

3. Regler nach Anspruch 2, dadurch gekennzeichnet, dass der Ventilkörper (13) mit seiner Zylinderfläche frei verschiebbar in einer Innenbohrung der Gabel (16) angeordnet ist, die auf der ebenfalls zylindrischen Aussenfläche des Sitzelementes (11) gleitet, und dass der Nadelventilkörper gesteuert wird durch einfachen Kontakt mit einer Stellschraube (18), mit der er nicht formschlüssig verbunden ist.

4. Regler nach einem der vorgehenden Ansprüche, dadurch gekennzeichnet, dass es sich bei dem Sitzelement (11) des Nadelventils um ein Zylinderteil handelt, das nur über die Zwischenschaltung eines hinteren geradlinigen Teiles des Austauscherrohres (8), das sich in Durchmesserrichtung quer über den rohrförmigen Mantel (7) erstreckt, koaxial zum rohrförmigen Mantel (7) festgelegt ist.

## Claims

1. Regulator of a Joule-Thomson effect cooler for a cryostat, comprising a tubular casing (7) around which there is wound an exchanger tube (8) in which gas under pressure is cooled by counter current and partially liquefied before expanding at the other end through an orifice (12), said regulator being formed by a needle (13) controlled by a metallic rod (20) with longitudinal expansion so as to re-close said orifice as the temperature falls, this rod being interior and coaxial to the tubular casing (7), characterised in that one end (21) of this rod (20) is fixed mechanically and is joined thermally by a transverse partition (22) to the tubular casing (7) at a point of the latter included between the upstream part (9) of the exchanger (8), at the gas supply temperature, and the downstream part (10) of this exchanger close to the needle and cooled by expansion of the gas, that the other end (23) of this rod is fixed to a cylindrical piece (16) with axial boring and diametrically slit (19) on a part of its length, the rod (20) being fixed in this piece on the non-slit side of the latter in order to form a fork for manoeuvering the needle, surrounding the seat (11, 12) of the needle (13) and moving this needle by means of a regulating mechanism (18), that said rod (20) has a smaller diameter than that of said cylindrical piece (16), which is of a much smaller diameter than that of the tubular casing (7) into which it enters in part, and finally that the annular space thus provided between the tubular casing (7) and the rod (20), just as between this casing and the cylindrical piece (16), and extending from the partition (22) to said downstream part (10), is furnished with a heat insulator opposing longitudinal and transverse movements of convection.

2. Regulator according to Claim 1, characterised in that the cylindro-conical-shaped needle (13) comprises, on a generatrix of its conical part, a flat or a hollow (15) of little depth forming a minimum passage determined to ensure the intervention of a secondary regulation for the low values of the ambient temperature.

3. Regulator according to Claim 2, characterised in that the needle (13) is mounted to slide freely by means of its cylindrical surface in an internal boring of the fork (16), which slides outside the seat (11), which is also cylindrical, and that it is controlled through simple contact with a regulating screw (18) with which it is not integral.

4. Regulator according to one of the preceding claims, characterised in that the seat (11) of the needle is a cylindrical piece fixed coaxially to the tubular casing (7) solely by means of a final rectilinear part (10) of the exchange tube (8) passing through this tubular casing (7) along a diameter.

FIG.1

0 170 948

0 170 948

FIG,2